# EUROPÄISCHE PATENTSCHRIFT

(11) **EP 3 729 007 B1**
(45) Veröffentlichungstag und Bekanntmachung des Hinweises auf die Patenterteilung: **04.01.2023**
(21) Anmeldenummer: 18803951.5
(22) Anmeldetag: 14.11.2018
(51) Int. Cl.: G01F 1/66, G01F 1/667, G01F 25/10

(54) **CLAMP-ON-ULTRASCHALL-DURCHFLUSSMESSGERÄT UND VERFAHREN ZUM JUSTIEREN DES CLAMP-ON-ULTRASCHALL-DURCHFLUSSMESSGERÄTS**
CLAMP-ON ULTRASONIC FLOWMETER AND METHOD FOR ADJUSTING THE CLAMP-ON ULTRASONIC FLOWMETER
DÉBITMÈTRE À ULTRASONS À PINCE DE SERRAGE ET PROCÉDÉ D'AJUSTEMENT DU DÉBITMÈTRE À ULTRASONS À PINCE DE SERRAGE

(30) Priorität: 21.12.2017 DE 102017130976
(43) Veröffentlichungstag der Anmeldung: 28.10.2020
(73) Patentinhaber: Endress + Hauser Flowtec AG, 4153 Reinach (CH)
(72) Erfinder: WIEST, Achim, 79576 Weil am Rhein (DE); BRUMBERG, Oliver, 79618 Rheinfelden (DE); BERGER, Andreas, 4228 Erschwil (CH)
(74) Vertreter: Waselikowski, Stefan
(86) Internationale Anmeldenummer: PCT/EP2018/081238
(87) Internationale Veröffentlichungsnummer: WO 2019/120773

(56) Entgegenhaltungen:
- EP-A1- 0 408 148
- EP-A1- 0 408 148
- DE-A1-102006 000 693
- DE-A1-102006 000 693
- JP-A- 2002 139 357
- JP-A- 2002 139 357
- US-A1- 2015 160 053

## Beschreibung

Clamp-On-Ultraschall-Durchflussmessgeräte werden beispielsweise eingesetzt, falls Durchflüsse von Medien mit hoher Temperatur und/oder korrosiven Eigenschaften durch Rohrleitungen gemessen werden müssen, so dass der Einsatz von Ultraschallwandlern in der Rohrleitung unzweckmäßig wäre. Darüber hinaus erspart man sich die relativ komplexe Fertigung von Messrohren mit Aufnahmen von Ultraschallwandlern. Jedoch besteht bei Clamp-On-Ultraschall-Durchflussmessgeräten die Notwendigkeit, die Ultraschallwandler des Clamp-On-Ultraschall-Durchflussmessgeräts zueinander auszurichten, wobei die optimale Ausrichtung zueinander von akustischen Eigenschaften des Messrohrs sowie des Mediums abhängt. Der Stand der Technik DE102006000693A1 zeigt Clamp-On-Ultraschall-Durchflussmessgeräte, bei welchen eine Kippvorrichtung dazu genutzt werden kann, einen Strahlengang der Ultraschallsignale in einer eine Messrohrachse umfassende Ebene zu kippen. Es hat sich jedoch gezeigt, dass dieses Kippen nur eine unzureichende Ausrichtung der Ultraschallwandler zueinander erlaubt.

Aufgabe der Erfindung ist es daher, ein Clamp-On-Ultraschall-Durchflussmessgerät mit einer verbesserten und robusten Ausrichtbarkeit der Ultraschallwandler sowie ein entsprechendes Verfahren zum Justieren des Clamp-On-Ultraschall-Durchflussmessgeräts vorzuschlagen.

Die Aufgabe wird gelöst durch eine Justiervorrichtung gemäß dem unabhängigen Anspruch 1 sowie durch ein Verfahren gemäß dem unabhängigen Anspruch 11.

Ein erfindungsgemäßes Clamp-On-Ultraschall-Durchflussmessgerät umfasst
ein Messrohr zum Führen eines Mediums;
ein Paar Ultraschallwandler welche entlang einer Messrohrachse versetzt zueinander am Messrohr angeordnet sind;
eine elektronische Mess-/Betriebsschaltung zum Betreiben der Ultraschallwandler sowie zum Generieren von Durchflussmesswerten,
wobei jeder Ultraschallwandler mindestens ein Wandlerelement, insbesondere ein Piezoelement zum Erzeugen und Detektieren von Ultraschallsignalen und ein Koppelelement aufweist,
wobei das Wandlerelement an einer dem Messrohr abgewandten ersten Seite des Koppelelements angeordnet ist, und wobei das Koppelelement dazu eingerichtet ist, über eine dem Messrohr zugewandte zweite Seite des Koppelelements mit dem Messrohr akustisch gekoppelt zu werden und Ultraschallsignale zwischen dem Wandlerelement und Messrohr sowie umgekehrt zu übertragen,
wobei das Ultraschall-Durchflussmessgerät für zumindest einen ersten Ultraschallwandler des Paars eine Justiervorrichtung zum Justieren des Ultraschallwandlers aufweist,
wobei die Justiervorrichtung zwischen dem Wandlerelement und der ersten Seite des Koppelelements oder zwischen dem Messrohr und der zweiten Seite des Koppelelements angeordnet ist und eine zum Messrohr gerichtete Koppelfläche aufweist,
dadurch gekennzeichnet, dass die Justiervorrichtung dazu eingerichtet ist mindestens einen Winkel eines Signalwegs bezüglich der Koppelfläche und/oder eine Signalweglänge zu ändern, wobei die Justiervorrichtung mindestens zwei unabhängige Freiheitsgrade aufweist,
wobei die Justiervorrichtung mit dem Koppelelement und dem Wandlerelement bzw.

Messrohr akustisch und mechanisch gekoppelt ist,
wobei das Wandlerelement eine Segmentierung in Segmente aufweist, wobei jedes Segment einzeln ansteuerbar ist, wobei die Segmentierung insbesondere eine Winkelsegmentierung oder eine lineare Segmentierung entlang der Messrohrachse ist,und/oderwobei die Justiervorrichtung ein verformbares Element und eine Verformungsvorrichtung aufweist,wobei die Form des verformbaren Elements mittelbar oder unmittelbar durch die Verformungsvorrichtung einstellbar ist,wobei die Verformungsvorrichtung beispielsweise eine Schraubvorrichtung oder eine Aktuatorvorrichtung aufweist.

Das Clamp-On-Ultraschall-Durchflussmessgerät basiert dabei beispielsweise auf dem Laufzeitdifferenzenprinzip.

In einer Ausgestaltung weist die Justiervorrichtung mindestens drei linear unabhängige Freiheitsgrade auf.

In einer Ausgestaltung ist ein erster Freiheitsgrad dazu eingerichtet, den Signalweg um einen ersten Winkel β1 in einer ersten senkrecht zur Koppelfläche stehenden Ebene bezüglich der Koppelfläche zu kippen,
und/oder wobei ein zweiter Freiheitsgrad dazu eingerichtet ist, den Signalweg um einen zweiten Winkel β2 in einer zweiten senkrecht zur Koppelfläche stehenden Ebene bezüglich der Koppelfläche zu kippen,
und/oder wobei ein dritter Freiheitsgrad dazu eingerichtet ist, die Signalweglänge einzustellen.

Bevorzugt ist die erste Ebene senkrecht zur zweiten Ebene.

Der dritte Freiheitsgrad ermöglicht es, die Signallaufzeiten in den Ultraschallwandlern anzugleichen, was eine vereinfachte und robustere Signalverarbeitung hinsichtlich der Berechnung von Durchflussmesswerten ermöglicht.

In einer Ausgestaltung weist das Ultraschall-Durchflussmessgerät für jeden Ultraschallwandler des Paars die Justiervorrichtung auf.

Mittels nur einer Justiervorrichtung zum Justieren lässt sich das Durchflussmessgerät nur auf ein lokales Optimum optimieren. Die Einrichtung einer solchen Justiervorrichtung bei jedem Ultraschallwandler ermöglicht eine sehr gute Justierung des Durchflussmessgeräts.

In einer Ausgestaltung weist das Wandlerelement ein Piezoelement auf, welches Piezoelement eine Segmentierung in Segmente aufweist, wobei jedes Segment einzeln ansteuerbar ist, wobei die Segmentierung insbesondere eine Winkelsegmentierung oder eine lineare Segmentierung entlang der Messrohrachse ist.

In einer Ausgestaltung weist die Aktuatorvorrichtung mindestens ein und insbesondere mindestens 3 Piezoelemente auf,
wobei das mindestens eine Piezoelement in einem Randbereich des verformbaren Elements angeordnet ist.

In einer Ausgestaltung weist die Justiervorrichtung zumindest zwei Keile mit jeweils zwei Stirnflächen und einer Randfläche auf, wobei die Keile über jeweils eine innere Stirnfläche akustisch und mechanisch gekoppelt sind, wobei ein erster Keil über eine äußere Stirnfläche mit dem Koppelelement akustisch und mechanisch gekoppelt ist, und wobei ein zweiter Keil über eine äußere Stirnfläche mit dem Wandlerelement bzw. dem Messrohr akustisch und mechanisch gekoppelt ist,

wobei die Keile gegeneinander sowie gegenüber dem Wandlerelement bzw. dem Messrohr drehbar gelagert sind.

In einer Ausgestaltung weichen akustische Impedanzen des Wandlerelements, des Koppelelements sowie der Justiervorrichtung weniger als 50% voneinander abweichen, wobei insbesondere eine Abfolge der Impedanzen entlang eines Signalwegs durch das Wandlerelement, das Koppelelements sowie die Justiervorrichtung monoton fallend oder monoton steigend ist.

In einer Ausgestaltung ist die Mess-/Betriebsschaltung dazu eingerichtet, die Justiervorrichtung zu betreiben, und während des Messbetriebs das Durchflussmessgerät zu justieren.

Bei einem erfindungsgemäßen Verfahren werden verschiedene Einstellungen der mindestens einen Justiervorrichtung eingerichtet,
wobei bei jeder Einstellung eine Amplitude und/oder Phase und/oder Zeitdauer mindestens eines durch einen ersten Ultraschallwandler erzeugten Ultraschallsignals mittels eines zweiten Ultraschallwandlers gemessen wird,
wobei eine Einstellung eine Wahl von Werten von die mindestens zwei Freiheitsgrade repräsentierenden Größen umfasst,
wobei die Amplitude bzw. die Bandbreite maximiert bzw. die Zeitdauer minimiert wird,
wobei das Justieren vor oder während eines Messprozesses durchgeführt wird.

Das Einrichten einer Einstellung umfasst das Verändern der Justiervorrichtung in mindestens einem Freiheitsgrad. Durch eine langsame Veränderung der Einstellung, welche Veränderung deutlich langsamer als eine Wiederholungsrate der Ultraschallsignal ist, kann das Ultraschall-Durchflussmessgerät während des Messbetriebs justiert werden, ohne den Messbetrieb zu stören. Eine leichte Veränderung der Einstellung zwischen und/oder während aufeinanderfolgenden Ultraschallsignalen verursacht nur kleine Änderungen des vom empfangenden Ultraschallwandler aufgenommenen Signals und stellen somit keine Einschränkung des Messbetriebs dar.

Eine Veränderung einer Ultraschallsignalamplitude durch eine Änderung der Einstellung der Justiervorrichtung bedingt ist dabei kleiner als 5%, und insbesondere kleiner als 2% und bevorzugt kleiner als 1%.

Im Folgenden wird die Erfindung anhand von Ausführungsbeispielen beschrieben.
Figs. 1 a) und b) zeigen Beispiele eines Ultraschallwandlers mit einer erfindungsgemäßen Justiervorrichtung;
und Figs. 2 a) und b) sowie Fig. 3 skizzieren Funktionsweisen erfindungsgemäßer Justiervorrichtungen;
und Fig. 4 zeigt Auswirkungen von Einstellungen von Freiheitsgraden auf Abstrahlwinkel eines Signalwegs;
und Fig. 5 skizziert Auswirkungen eines schlecht eingestellten Ultraschallwandlerpaars eines Clamp-On-Ultraschall-Durchflussmessgeräts;
und Figs. 6 a) bis c) zeigen verschiedene Ausgestaltungen eines Wandlerelements;

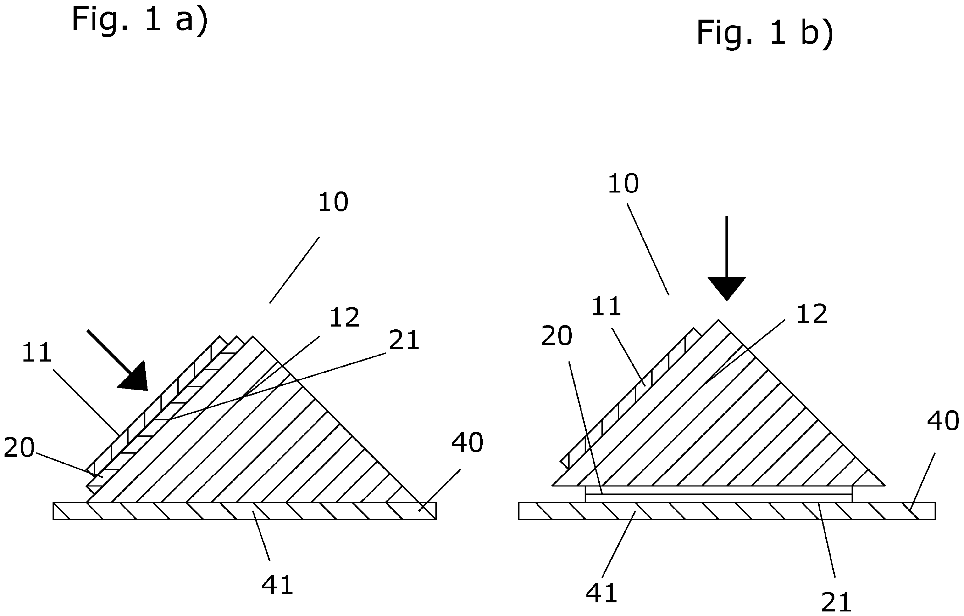

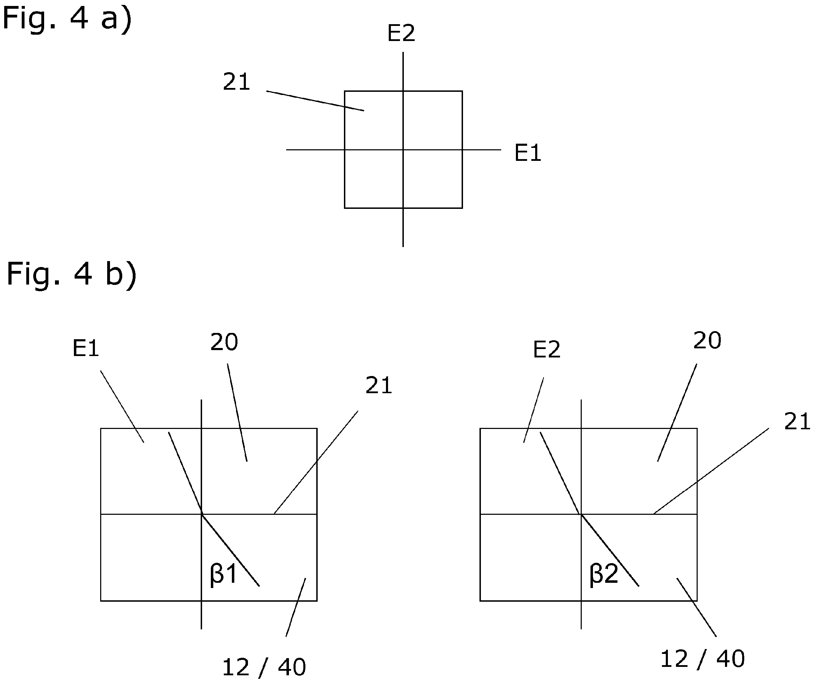

Fig. 1 a) zeigt einen an eine Messrohrwand 41 eines Messrohr 40 eines Ultraschall-Durchflussmessgeräts angelegten Ultraschallwandler 10, bei welchem eine erfindungsgemäße Justiervorrichtung 20 zwischen einem Wandlerelement 11 und einem Koppelelement 12 des Ultraschallwandlers angeordnet ist. Fig. 1 b) zeigt einen weiteren Ultraschallwandler 10, wobei die Justiervorrichtung 20 nun zwischen Koppelelement 12 und Messrohr 40 angeordnet ist. Die Justiervorrichtung weist eine Koppelfläche 21 auf, welche mit dem Koppelelement 21 bzw. mit dem Messrohr akustisch und mechanisch gekoppelt ist. Das Wandlerelement 11 ist dazu eingerichtet Ultraschallsignale zu erzeugen und zu empfangen, wobei ein erzeugtes Ultraschallsignal im Falle von Fig. 1 a) zunächst in die Justiervorrichtung eingekoppelt wird und anschließend durch das Koppelement 12 zum Messrohr läuft, und wobei im Falle von Fig. 1 b) das Signal vom Ultraschallwandler zunächst in das Koppelelement 12 eingekoppelt wird und anschließend über die Justiervorrichtung zum Messrohr läuft. Die in Figs. 1 a) und b) gezeigten Pfeile zeigen jeweils eine Blickrichtung auf die Koppelfläche 21, wie in Figs. 4 a) und b) gezeigt.

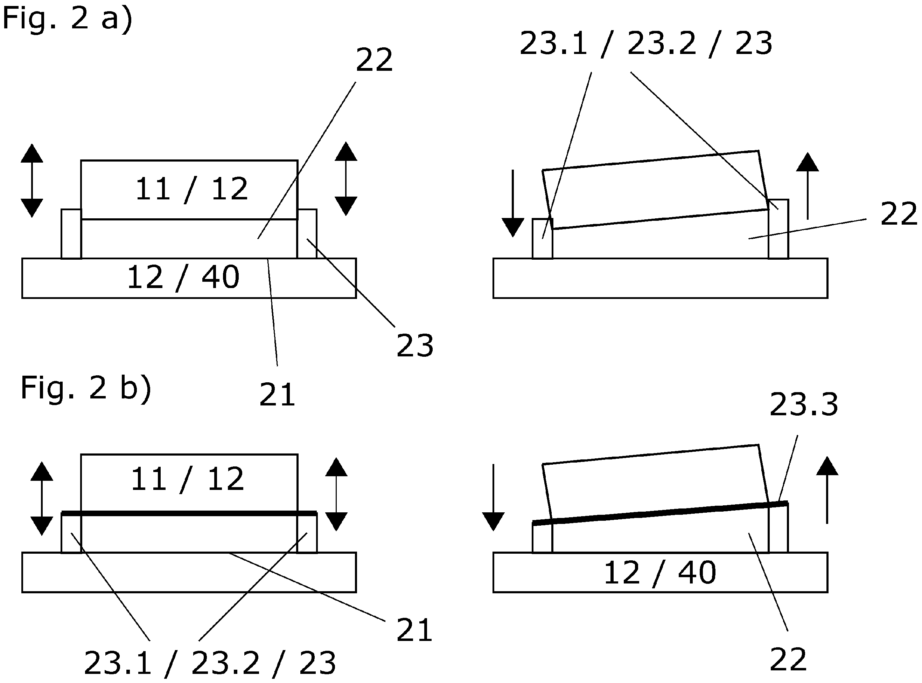

Figs. 2 a) und b) skizzieren die Funktionsweisen von Justiervorrichtungen, welche ein verformbares Element 22 und eine Verformungsvorrichtung, beispielsweise eine Schraub- bzw. Aktuatorvorrichtungen zum Verformen des verformbaren Elements 22 aufweisen. Das verformbare Element kann beispielsweise ein Silikonkissen sein, welches zwischen Wandlerelement und Koppelelement bzw. zwischen Koppelelement und Messrohr eingeklemmt ist. oder eine Flüssigkeit, welche Flüssigkeit zwischen Wandlerelement 11 und Koppelelement 12 bzw. zwischen Koppelelement 12 und Messrohr 40 eingekapselt ist. Es ist auch der Einsatz eines Gelkissens oder eines Elastomers möglich. Mittels der Verformungsvorrichtung kann eine Form des verformbaren Elements 22 eingestellt werden. Ein Silikonkissen ist dabei weitgehend frei in seiner Verformbarkeit, wobei eine Randbedingung der Verformbarkeit des Silikonkissens eine Volumenerhaltung ist. Durch entgegengesetzte Ansteuerung der Verformungseinrichtungen 23 kann das Wandlerelement bzw. Koppelelement gegenüber der Koppelfläche und somit ein Ultraschallsignalweg gekippt werden. Bei gleichgerichteter Ansteuerung der Verformungselemente (nicht gezeigt) kann ein Abstand zwischen Wandlerelement und Koppelelement bzw. zwischen Koppelelement und Messrohr und somit eine Signalweglänge des Ultraschallsignals zwischen einem Ultraschallwandlerpaar eines Clamp-On-Ultraschall-Durchflussmessgeräts eingestellt werden. Wie in Fig. 2 b) gezeigt kann die Justiervorrichtung zu Erhöhung einer mechanischen Stabilität zwischen Wandlerelement bzw. Koppelelement und dem verformbaren Element 22 ein plattenförmiges Element 23.3 aufweisen.

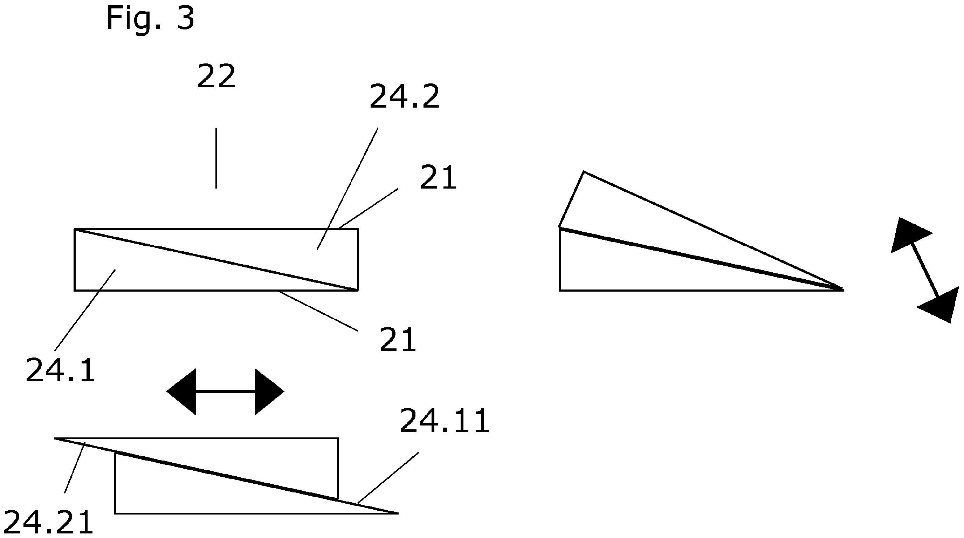

Fig. 3 skizziert schematisch eine weitere Möglichkeit, ein verformbares Element einer Justiervorrichtung einzurichten. Hierbei werden ein erster Keil 24.1 und ein zweiter Keil 24.2 über innere Stirnflächen 24.11, 24.21 in Kontakt gebracht. Durch Verschieben der Keile zueinander lässt sich eine Höhe des verformbaren Elements 22 und somit die Signalweglänge einstellen. Durch Verdrehen der Keile gegeneinander lässt sich ein Kippwinkel und somit Ultraschallsignalweg einstellen. Je nachdem, ob die Keile 24 gemäß Fig. 1 a) oder Fig. 1 b) angewandt werden, ist die Koppelfläche eine äußere Stirnfläche des ersten Keils oder des zweiten Keils.

Fig. 4 a) skizziert die Koppelfläche 21 und Lagen von orthogonal zur Koppelfläche sowie zueinander orthogonal stehenden Ebenen E1 und E2, wobei durch Einstellen eines ersten Freiheitsgrads der Justiervorrichtung ein erster Winkel β1 des Ultraschallsignalwegs parallel zur ersten Ebene E1 einstellbar ist, und wobei durch Einstellen eines zweiten Freiheitsgrads der Justiervorrichtung ein zweiter Winkel β1 des Ultraschallsignalwegs parallel zur zweiten Ebene E1 einstellbar ist, siehe Fig. 4 b).

Eine erfindungsgemäße Justiervorrichtung kann also drei Freiheitsgrade aufweisen, wobei ein erster Freiheitsgrad und ein zweiter Freiheitsgrad erlauben, jeweils einen Winkel des Signalwegs nach Austritt aus der Justiervorrichtung 20 einzustellen, und wobei ein dritter Freiheitsgrad erlaubt, eine Signalweglänge einzustellen. Eine erfindungsgemäße Justiervorrichtung muss mindestens zwei Freiheitsgrade aufweisen, wobei ein Freiheitsgrad dem dritten Freiheitsgrad entspricht. Der jeweils andere Freiheitsgrad ermöglicht vorteilhafterweise das Einstellen eines Winkels, welcher in einer eine Messrohrachse beinhaltende Ebene liegt.

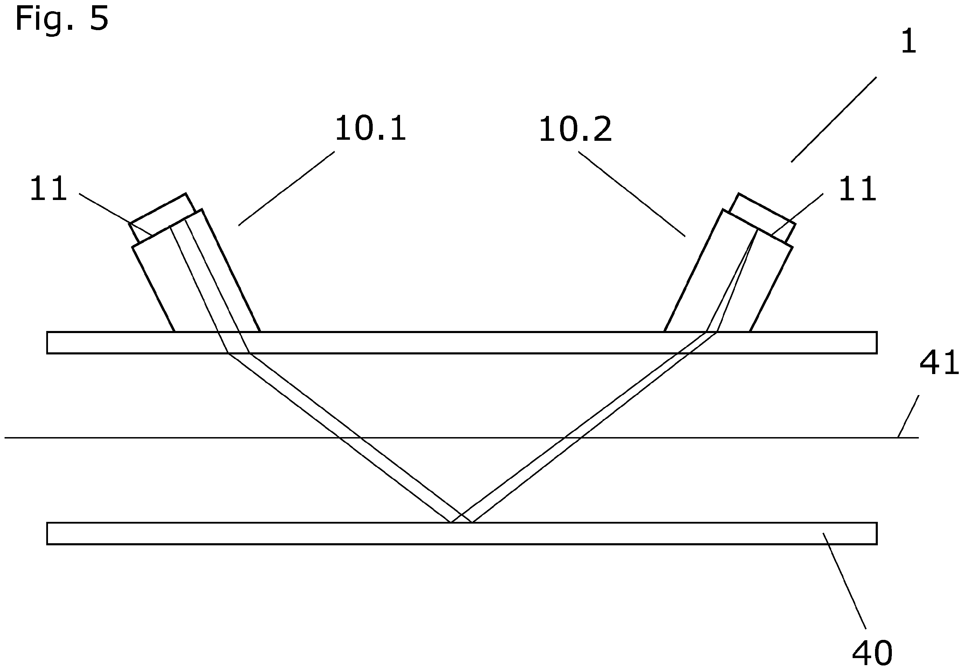

Fig. 5 stellt beispielhaft eine gute Justage und eine schlechte Justage zweier Ultraschallwandler eines Ultraschall-Durchflussmessgeräts mittels zweier beispielhafter Verläufe von einem zweiten Ultraschallwandler 10.2 eines Clamp-On-Ultraschall-Durchflussmessgeräts 1 ausgehender Signalwege vor, welche bei einem ersten Ultraschallwandler 10.1 enden. Ultraschallsignale fächern sich nach Abstrahlung mittels eines Ultraschallwandlers üblicherweise auf und verändern ihre räumliche Form. In einem Querschnitt eines solchen Ultraschallsignals senkrecht zur Ausbreitungsrichtung existiert ein Bereich mit maximaler Signalamplitude. Der Signalweg eines Ultraschallsignals ist durch den Bereich maximaler Signalamplitude entlang seiner Ausbreitungsrichtung gezeichnet. Ein erster in Fig. 5 skizzierter Signalweg trifft dabei in einem Randbereich auf das Wandlerelement des ersten Ultraschallwandlers. In einem solchen Fall geht Signalenergie auch dadurch verloren, dass Bereiche eines Ultraschallsignals mit hoher Signalenergie nicht vom Ultraschallwandler aufgenommen werden. Eine optimale Einstellung der Ultraschallwandler 10.1 und 10.2 zueinander erfordert daher, dass Signalwege von Ultraschallsignalen in einem Zentralbereich des Wandlerelements des empfangenden Ultraschallwandlers 10.1 bzw. 10.2 eintreffen. Dies gilt für eine wie hier dargestellte Fehljustage in einer die Messrohrachse beinhaltenden Ebene sowie für Fehljustagen bzgl. senkrecht zu dieser Ebene stehenden Ebenen.

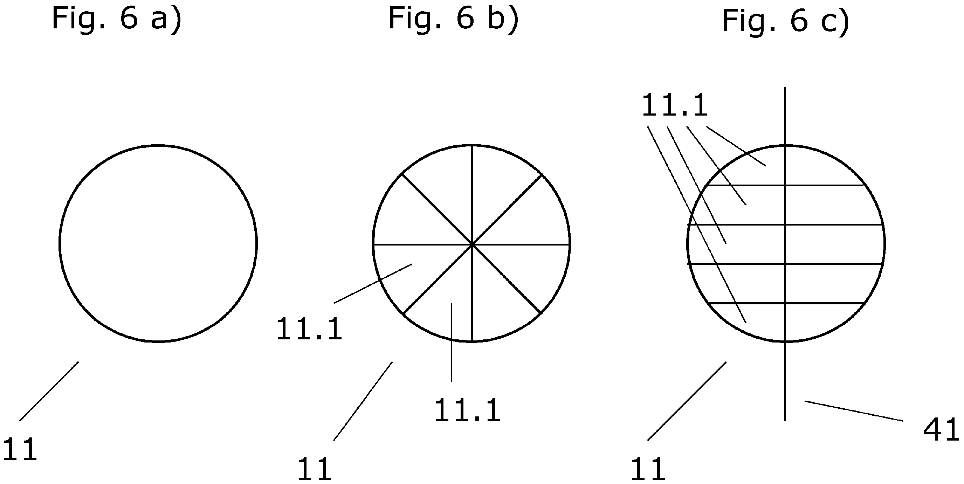

Figs. 6 a) bis c) skizzieren beispielhafte Ausgestaltungen eines Wandlerelements 11, wobei Fig. 6 a) ein scheibenförmiges Wandlerelement darstellt, und wobei Figs. 6 b) und 6 c) mittels Segmente 11.1 aufgebauter Wandlerelemente 11 darstellen, wobei das Wandlerelement gemäß Fig. 6 b) aus mehreren Winkelsegmenten und das Wandlerelement gemäß Fig. 6 c) mittels mehrerer Linearsegmente aufgebaut ist. Die Anzahl der Segmente ist dabei mindestens 2 und höchstens ein Googolplex. Vorteilhafterweise sind einzelne Segmente eines Wandlerelements separat elektrisch angesteuert.

Ein Wandlerelement gemäß Fig. 6a) ist einfach zu fertigen, hat aber den Nachteil, dass eine fehlerhafte Justage, wie beispielsweise in Fig. 5 gezeigt nur zu einer Signalabschwächung und/oder einer Signalverzerrung, insbesondere eine zeitliche Signalverbreiterung eines Ultraschallsignals führt. Daher trägt ein von einem solchen Piezoelement empfangenes Ultraschallsignal keine Information bezüglich einer eventuellen Fehljustage. Bei einem Wandlerelement gemäß der Figs. 6 b) und c) mit separater elektrischer Ansteuerung der Segmente führt eine Fehljustage zu einem zeitlich getrennten Ansprechen der einzelnen Segmente auf ein eintreffendes Ultraschallsignal und kann dazu genutzt werden, die Ultraschallwandler zu justieren, indem die zeitliche Trennung des Ansprechens reduziert wird. Ein Wandlerelement gemäß Fig. 6 b) zeigt dabei eine gute Winkelauflösung, ein Wandlerelement gemäß Fig. 6 c) zeigt eine gute Auflösung in eine lineare Richtung.

### Bezugszeichenliste

- 1: Clamp-On-Ultraschall-Durchflussmessgerät
- 10: Ultraschallwandler
- 10.1: erster Ultraschallwandler
- 10.2: zweiter Ultraschallwandler
- 11: Wandlerelement
- 11.1: Segment
- 12: Koppelelement
- 12.1: erste Seite des Koppelelements
- 12.2: zweite Seite des Koppelelements
- 20: Justiervorrichtung
- 21: Koppelfläche
- 22: verformbares Element
- 23: Verformungsvorrichtung
- 23.1: Schraubvorrichtung
- 23.2: Aktuatorvorrichtung
- 23.3: plattenförmiges Element
- 24: Keil
- 24.1: erster Keil
- 24.11: innere Stirnfläche des ersten Keils
- 24.2: zweiter Keil
- 24.21: innere Stirnfläche des zweiten Keils
- +30: elektronische Mess-/Betriebsschaltung
- 40: Messrohr
- 41: Messrohrachse
- 50: Freiheitsgrad
- 50.1: erster Freiheitsgrad
- 50.2: zweiter Freiheitsgrad
- 50.3: dritter Freiheitsgrad
- β1: erster Winkel
- β2: zweiter Winkel
- E1: erste Ebene
- E2: zweite Ebene

## Patentansprüche

1. Clamp-On-Ultraschall-Durchflussmessgerät (1) umfassend:
Ein Messrohr (40) zum Führen eines Mediums;
Ein Paar Ultraschallwandler (10) welche entlang einer Messrohrachse (41) versetzt zueinander am Messrohr angeordnet sind;
Eine elektronische Mess-/Betriebsschaltung zum Betreiben der Ultraschallwandler sowie zum Generieren von Durchflussmesswerten des Mediums, wobei jeder Ultraschallwandler mindestens ein Wandlerelement (11) zum Erzeugen und Detektieren von Ultraschallsignalen und ein Koppelelement (12) aufweist, wobei das Wandlerelement an einer dem Messrohr abgewandten ersten Seite des Koppelelements angeordnet ist, und wobei das Koppelelement dazu eingerichtet ist, über eine dem Messrohr zugewandte zweite Seite des Koppelelements mit dem Messrohr akustisch gekoppelt zu werden und Ultraschallsignale zwischen dem Wandlerelement und Messrohr sowie umgekehrt zu übertragen,
wobei das Ultraschall-Durchflussmessgerät für zumindest einen ersten Ultraschallwandler (10.1) des Paars eine Justiervorrichtung (20) zum Justieren des Ultraschallwandlers aufweist,
wobei die Justiervorrichtung (20) zwischen dem Wandlerelement und der ersten Seite des Koppelelements oder zwischen dem Messrohr und der zweiten Seite des Koppelelements angeordnet ist und eine zum Messrohr gerichtete Koppelfläche aufweist,
wobei die Justiervorrichtung dazu eingerichtet ist mindestens einen Winkel eines Signalwegs bezüglich der Koppelfläche und/oder eine Signalweglänge zu ändern,
wobei die Justiervorrichtung mit dem Koppelelement und dem Wandlerelement bzw. Messrohr akustisch und mechanisch gekoppelt ist,
**dadurch gekennzeichnet, dass**
die Justiervorrichtung mindestens zwei Freiheitsgrade aufweist,
wobei das Wandlerelement (11) eine Segmentierung in Segmente aufweist (11.1),
wobei jedes Segment einzeln ansteuerbar ist, wobei die Segmentierung insbesondere eine Winkelsegmentierung oder eine lineare Segmentierung entlang der Messrohrachse ist,
und/oder
wobei die Justiervorrichtung ein verformbares Element (22) und eine Verformungsvorrichtung (23) aufweist,
wobei die Form des verformbaren Elements mittelbar oder unmittelbar durch die Verformungsvorrichtung einstellbar ist,
wobei die Verformungsvorrichtung beispielsweise eine Schraubvorrichtung (23.1) oder eine Aktuatorvorrichtung (23.2) aufweist.

2. Durchflussmessgerät nach Anspruch 1,
wobei die Justiervorrichtung mindestens drei Freiheitsgrade aufweist.

3. Durchflussmessgerät nach Anspruch 2,
wobei ein erster Freiheitsgrad ermöglicht, den Signalweg um einen ersten Winkel (β1) in einer ersten senkrecht zur Koppelfläche (21) stehenden Ebene (E1) bezüglich der Koppelfläche zu kippen,
und/oder wobei ein zweiter Freiheitsgrad ermöglicht, den Signalweg um einen zweiten Winkel (β2) in einer zweiten senkrecht zur Koppelfläche stehenden Ebene (E2) bezüglich der Koppelfläche zu kippen,
und/oder wobei ein dritter Freiheitsgrad ermöglicht, die Signalweglänge einzustellen.

4. Durchflussmessgerät nach Anspruch 3,
wobei die erste Ebene die Messrohrachse beinhaltet.

5. Durchflussmessgerät nach einem der vorigen Ansprüche,
wobei das Durchflussmessgerät für jeden Ultraschallwandler (10) des Paars die Justiervorrichtung (20) aufweist.

6. Durchflussmessgerät nach einem der vorigen Ansprüche,
wobei die Aktuatorvorrichtung (23.1) mindestens ein und insbesondere mindestens 3 Piezoelemente aufweist,
wobei das Piezoelement in einem Randbereich des verformbaren Elements angeordnet ist.

7. Durchflussmessgerät nach einem der vorigen Ansprüche,
wobei die Verformungsvorrichtung ein plattenförmiges Element (23.3) aufweist, welches auf einer dem Wandlerelement zugewandten Seite der Justiervorrichtung angeordnet ist.

8. Durchflussmessgerät nach einem der vorigen Ansprüche,
wobei die Justiervorrichtung zumindest zwei Keile (24) mit jeweils zwei Stirnflächen und einer Randfläche aufweist,
wobei die Keile über jeweils eine innere Stirnfläche (24.11, 24.21) akustisch und mechanisch gekoppelt sind, wobei ein erster Keil (24.1) über eine äußere Stirnfläche mit dem Koppelelement akustisch und mechanisch gekoppelt ist, und wobei ein zweiter Keil (24.2) über eine äußere Stirnfläche mit dem Wandlerelement bzw. dem Messrohr akustisch und mechanisch gekoppelt ist,
wobei die Keile gegeneinander sowie gegenüber dem Wandlerelement bzw. dem Messrohr und dem Koppelelement drehbar gelagert sind.

9. Durchflussmessgerät nach einem der vorigen Ansprüche,
wobei akustische Impedanzen des Wandlerelements, des Koppelelements sowie der Justiervorrichtung weniger als 50% voneinander abweichen, wobei insbesondere eine Abfolge der Impedanzen entlang eines Signalwegs durch das Wandlerelement, das Koppelelements sowie die Justiervorrichtung monoton fallend oder monoton steigend ist.

10. Durchflussmessgerät nach einem der vorigen Ansprüche,
wobei die elektronische Mess-/Betriebsschaltung dazu eingerichtet ist, die Justiervorrichtung zu betreiben, und während des Messbetriebs das Durchflussmessgerät zu justieren.

11. Verfahren zum Justieren des Clamp-On-Ultraschall-Durchflussmessgeräts nach einem der vorigen Ansprüche,
wobei verschiedene Einstellungen der mindestens einen Justiervorrichtung eingerichtet werden,
wobei bei jeder Einstellung eine Amplitude und/oder Phase und/oder Zeitdauer mindestens eines durch einen ersten Ultraschallwandler erzeugten Ultraschallsignals mittels eines zweiten Ultraschallwandlers gemessen wird,
wobei eine Einstellung eine Wahl von Werten von die mindestens zwei Freiheitsgrade repräsentierenden Größen umfasst,
wobei die Amplitude bzw. die Bandbreite maximiert bzw. die Zeitdauer minimiert wird,
wobei das Justieren vor oder während eines Messprozesses eines Durchflusses des Mediums durch das Messrohr durchgeführt wird.

## Claims

1. Clamp-on ultrasonic flowmeter (1) comprising:
A measuring tube (40) designed to conduct a medium;
A pair of ultrasonic transducers (10), which are arranged on the measuring tube in a manner in which they are offset in relation to one another along a measuring tube axis (41);
An electronic measuring/operating circuit designed to operate the ultrasonic transducers and to generate flow measured values of the medium, wherein each ultrasonic transducer has at least a transducer element (11) designed to generate and detect ultrasonic signals, and a coupling element (12),
wherein the transducer element is arranged on a first side of the coupling element facing away from the measuring tube, and wherein the coupling element is designed to be coupled acoustically with the measuring tube by means of a second side of the coupling element facing towards the measuring tube and to transmit ultrasonic signals between the transducer element and the measuring tube and vice versa,
wherein the ultrasonic flowmeter for at least a first ultrasonic transducer (10.1) of the pair has an adjustment unit (20) designed to adjust the ultrasonic transducer, wherein the adjustment unit (20) is arranged between the transducer element and the first side of the coupling element or between the measuring tube and the second side of the coupling element and has a coupling surface that faces towards the measuring tube,
wherein the adjustment unit is designed to modify at least an angle of a signal path in relation to the coupling surface and/or a signal path length, wherein the adjustment unit is coupled acoustically and mechanically with the coupling element and the transducer element or the measuring tube,
**characterized in that**
the adjustment unit has at least two degrees of freedom,
wherein the transducer element (11) has a segmentation in segments (11.1),
wherein each segment can be activated individually, wherein the segmentation is particularly an angular segmentation or a linear segmentation along the measuring tube axis,
and/or
wherein the adjustment unit has a deformable element (22) and a deformation unit (23),
wherein the shape of the deformable element can be set directly or indirectly by the deformation unit,
wherein the deformation unit has, for example, a screw apparatus (23.1) or an actuator unit (23.2).

2. Flowmeter as claimed in Claim 1,
wherein the adjustment unit has at least three degrees of freedom.

3. Flowmeter as claimed in Claim 2,
wherein a first degree of freedom enables the signal path to tilt in relation to the coupling surface around a first angle (β1) in a first plane (E1) perpendicular to the coupling surface (21),
and/or wherein a second degree of freedom enables the signal path to tilt in relation to the coupling surface around a second angle (β2) in a second plane (E2) perpendicular to the coupling surface,
and/or wherein a third degree of freedom allows the signal path length to be adjusted.

4. Flowmeter as claimed in Claim 3,
wherein the first plane contains the measuring tube axis.

5. Flowmeter as claimed in one of the previous claims,
wherein the flowmeter features the adjustment unit (20) for each ultrasonic transducer (10) of the pair.

6. Flowmeter as claimed in one of the previous claims,
wherein the actuator unit (23.1) has at least one and particularly at least 3 piezoelectric elements,
wherein the piezoelectric element is arranged in a marginal area of the deformable element.

7. Flowmeter as claimed in one of the previous claims,
wherein the deformation unit has a plate-like element (23.3), wherein the element is arranged on a side of the adjustment unit facing towards the transducer element.

8. Flowmeter as claimed in one of the previous claims,
wherein the adjustment unit has at least two wedges (24) each with two front faces and an edge surface,
wherein the wedges are acoustically and mechanically coupled via an inner front face (24.11, 24.21), wherein a first wedge (24.1) is acoustically and mechanically coupled to the coupling element via an outer front face, and wherein a second wedge (24.2) is coupled to the transducer element or to the measuring tube via an outer front face,
wherein the wedges are pivot-mounted against one another and in relation to the transducer element or the measuring tube and the coupling element.

9. Flowmeter as claimed in one of the previous claims,
wherein acoustic impedances of the transducer element, the coupling element and the adjustment unit deviate from one another by less than 50 %,
wherein particularly a sequence of impedances along a signal path through the transducer element, the coupling element and the adjustment unit is monotonic decreasing or monotonic increasing.

10. Flowmeter as claimed in one of the previous claims,
wherein the electronic measuring/operating circuit is designed to operate the adjustment unit and to adjust the flowmeter during the measuring mode.

11. Method designed to adjust the clamp-on ultrasonic flowmeter as claimed in one of the previous claims,
wherein different settings of the at least one adjustment unit are configured,
wherein, for each setting, an amplitude and/or a phase and/or a duration of at least an ultrasonic signal generated by a first ultrasonic transducer is measured by means of a second ultrasonic transducer,
wherein a setting comprises a selection of values of variables representing the at least two degrees of freedom,
wherein the amplitude or the bandwidth is maximized or the duration is minimized,
wherein the adjustment is performed before or during a measuring process of a flow of the medium through the measuring tube.

## Revendications

1. Débitmètre à ultrasons clamp-on (1) comprenant :
Un tube de mesure (40) destiné à guider un produit ;
Une paire de transducteurs à ultrasons (10), lesquels sont disposés sur le tube de mesure de manière décalée l'un par rapport à l'autre le long d'un axe de tube de mesure (41) ;
Un circuit électronique de mesure/d'exploitation destiné à exploiter les transducteurs à ultrasons ainsi que pour générer des valeurs mesurées de débit du produit, chaque transducteur à ultrasons présentant au moins un élément transducteur (11) destiné à générer et à détecter des signaux ultrasonores, ainsi qu'un élément de couplage (12),
l'élément transducteur étant disposé sur un premier côté de l'élément de couplage opposé au tube de mesure, et l'élément de couplage étant conçu pour être couplé acoustiquement au tube de mesure par l'intermédiaire d'un deuxième côté de l'élément de couplage tourné vers le tube de mesure et pour transmettre des signaux ultrasonores entre l'élément transducteur et le tube de mesure et inversement,
le débitmètre à ultrasons comprenant pour au moins un premier transducteur à ultrasons (10.1) de la paire un dispositif d'ajustage (20) destiné à ajuster le transducteur à ultrasons,
le dispositif d'ajustage (20) étant disposé entre l'élément transducteur et le premier côté de l'élément de couplage ou entre le tube de mesure et le deuxième côté de l'élément de couplage et comprenant une surface de couplage orientée vers le tube de mesure,
le dispositif d'ajustage étant conçu pour modifier au moins un angle d'un trajet de signal par rapport à la surface de couplage et/ou une longueur de trajet de signal, le dispositif d'ajustage étant couplé acoustiquement et mécaniquement à l'élément de couplage et à l'élément transducteur ou au tube de mesure,
**caractérisé en ce que**
le dispositif d'ajustage présente aux moins deux degrés de liberté,
l'élément transducteur (11) présentant une segmentation en segments (11.1),
chaque segment pouvant être commandé individuellement, la segmentation étant notamment une segmentation angulaire ou une segmentation linéaire le long de l'axe de tube de mesure,
et/ou
le dispositif d'ajustage présentant un élément déformable (22) et un dispositif de déformation (23),
la forme de l'élément déformable étant réglable directement ou indirectement par le dispositif de déformation,
le dispositif de déformation présentant par exemple un dispositif à vis (23.1) ou un dispositif actionneur (23.2).

2. Débitmètre selon la revendication 1,
pour lequel le dispositif d'ajustage présente au moins trois degrés de liberté.

3. Débitmètre selon la revendication 2,
pour lequel un premier degré de liberté permet d'incliner par rapport à la surface de couplage le trajet du signal d'un premier angle (β1) dans un premier plan (E1) perpendiculaire à la surface de couplage (21),
et/ou pour lequel un deuxième degré de liberté permet d'incliner par rapport à la surface de couplage le trajet du signal d'un deuxième angle (β2) dans un deuxième plan (E2) perpendiculaire à la surface de couplage,
et/ou pour lequel un troisième degré de liberté permet d'ajuster la longueur du trajet du signal.

4. Débitmètre selon la revendication 3,
pour lequel le premier plan contient l'axe de tube de mesure.

5. Débitmètre selon l'une des revendications précédentes,
pour lequel le débitmètre comprend, pour chaque transducteur à ultrasons (10) de la paire, le dispositif d'ajustage (20).

6. Débitmètre selon l'une des revendications précédentes,
pour lequel le dispositif actionneur (23.1) présente au moins un et notamment au moins 3 éléments piézoélectriques,
l'élément piézoélectrique étant disposé dans une zone de bord de l'élément déformable.

7. Débitmètre selon l'une des revendications précédentes,
pour lequel le dispositif de déformation présente un élément en forme de plaque (23.3), lequel élément est disposé sur un côté du dispositif d'ajustage tourné vers l'élément transducteur.

8. Débitmètre selon l'une des revendications précédentes,
pour lequel le dispositif d'ajustage présente au moins deux coins (24) avec respectivement deux surfaces frontales et une surface de bord,
les coins étant couplés acoustiquement et mécaniquement par une surface frontale intérieure (24.11, 24.21), un premier coin (24.1) étant couplé acoustiquement et mécaniquement à l'élément de couplage par une surface frontale extérieure, et un deuxième coin (24.2) étant couplé à l'élément transducteur ou au tube de mesure par une surface frontale extérieure,
les coins étant logés de manière à pouvoir tourner l'un par rapport à l'autre ainsi que par rapport à l'élément transducteur ou au tube de mesure et à l'élément de couplage.

9. Débitmètre selon l'une des revendications précédentes,
pour lequel les impédances acoustiques de l'élément transducteur, de l'élément de couplage ainsi que du dispositif d'ajustage diffèrent les unes des autres de moins de 50 %,
pour lequel notamment une succession des impédances le long d'un trajet de signal à travers l'élément transducteur, l'élément de couplage ainsi que le dispositif d'ajustage est monotone décroissante ou monotone croissante.

10. Débitmètre selon l'une des revendications précédentes,
pour lequel le circuit électronique de mesure/d'exploitation est conçu pour exploiter le dispositif d'ajustage et pour ajuster le débitmètre pendant le mode de mesure.

11. Procédé destiné à l'ajustage du débitmètre à ultrasons clamp-on selon l'une des revendications précédentes,
pour lequel différents réglages de l'au moins un dispositif d'ajustage sont établis,
pour lequel, à chaque réglage, une amplitude et/ou une phase et/ou une durée d'au moins un signal ultrasonore généré par un premier transducteur à ultrasons est mesurée au moyen d'un deuxième transducteur à ultrasons,
un réglage comprenant une sélection de valeurs de grandeurs représentant les au moins deux degrés de liberté,
l'amplitude ou la largeur de bande étant maximisée ou la durée étant minimisée,
l'ajustage étant effectué avant ou pendant un processus de mesure d'un débit du produit à travers le tube de mesure.
